# EUROPEAN PATENT APPLICATION

(11) **EP 4 386 919 A1**
(43) Date of publication of application: **19.06.2024**
(21) Application number: 23796807.8
(22) Date of filing: 27.04.2023
(51) Int. Cl.: H01M 10/052, H01M 10/0569, H01M 4/36, H01M 4/38, H01M 4/62, H01M 4/02

(54) **LITHIUM-SULFUR BATTERY HAVING HIGH ENERGY DENSITY**

(30) Priority: 28.04.2022 KR 20220052496
(71) Applicant: LG Energy Solution, Ltd., Seoul 07335 (KR)
(72) Inventor: PARK, Intae, Daejeon 34122 (KR); KIM, Yonghwi, Daejeon 34122 (KR); CHOI, Ran, Daejeon 34122 (KR); LEE, Changhoon, Daejeon 34122 (KR); LEE, Hyunsoo, Daejeon 34122 (KR); SONG, Myeongjun, Daejeon 34122 (KR); PARK, Seonghyo, Daejeon 34122 (KR)
(74) Representative: Goddar, Heinz J.
(86) International application number: PCT/KR2023/005726
(87) International publication number: WO 2023/211164

(57) **Abstract**

Disclosed is a lithium-sulfur battery having a high energy density which is capable of utilizing 80% or more of the theoretical discharging capacity (1,675 mAh/g) of sulfur by not using a nitrile-based solvent, and also is capable of implementing an excellent life performance by using together a positive electrode carbon material with high specific surface area, even while using SSE (sparingly solvating electrolyte) electrolyte system (discharging capacity: ~1,600 mAh/gs) rather than the existing catholyte electrolyte system (discharging capacity: -1,200 mAh/gs). The lithium-sulfur battery comprises an electrolyte containing a first solvent containing a fluorine-based ether compound, a second solvent containing a glyme-based compound, and a lithium salt; and a positive electrode containing sulfur and a carbon material as an active material, wherein the carbon material includes two or more types of carbon materials having different average pore sizes.

## Description

### [Technical Field]

The present application claims the benefit of priority based on Korean Patent Application No. 10-2022-0052496 filed on April 28, 2022, the entire contents of which are incorporated herein as a part of the present specification.

The present invention relates to a lithium-sulfur battery having a high energy density capable of utilizing 80% or more of the theoretical discharging capacity of sulfur and implementing an excellent lifetime performance, and more specifically, to a lithium-sulfur battery having a high energy density capable of utilizing 80% or more of the theoretical discharging capacity (1,675 mAh/g) of sulfur by not using a nitrile-based solvent, and also implementing an excellent lifetime performance by using together a positive electrode carbon material with high specific surface area, even while using an SSE (sparingly solvating electrolyte) electrolyte system (discharging capacity: ~1,600 mAh/gs) rather than the existing catholyte electrolyte system (discharging capacity: ~1,200 mAh/gs).

### [Background Art]

As interest in energy storage technology continues to increase, since its application is expanding from energy for mobile phones, tablets, laptops and camcorders to even energy for electric vehicles (EVs) and hybrid electric vehicles (HEVs), research and development of electrochemical devices are gradually increasing. The field of electrochemical devices is an area that is receiving the most attention in this respect. Among them, the development of secondary batteries such as a lithium-sulfur battery capable of being charged/discharged has become a focus of attention. In recent years, in developing these batteries, in order to improve capacity density and specific energy, it has led to research and development in designs for new electrodes and batteries.

Among these electrochemical devices, a lithium-sulfur battery (Li-S battery) has a high energy density (theoretical capacity) and thus is in the spotlight as a next-generation secondary battery that can replace a lithium-ion battery. In such a lithium-sulfur battery, a reduction reaction of sulfur and an oxidation reaction of lithium metal occur during discharging. In this case, sulfur forms lithium polysulfide (LiPS) having a linear structure from Ss having a ring structure. This lithium-sulfur battery is characterized by showing a stepwise discharging voltage until the polysulfide is completely reduced to Li₂S.

However, the biggest obstacle of the lithium-sulfur battery in the commercialization is the lifetime, and the charging/discharging efficiency is reduced during the charging/discharging process, and the lifetime of the battery is deteriorated. There are various reasons for the deterioration of the lifetime of the lithium-sulfur battery, such as side reactions of electrolytes (sedimentation of by-products following the decomposition of the electrolyte), instability of lithium metal (dendrite grows on the lithium negative electrode, resulting in a short circuit), and sedimentation of by-products from the positive electrode (leaching of the lithium polysulfide from the positive electrode).

That is, in a battery using a sulfur-based compound as a positive electrode active material and an alkali metal such as lithium as a negative electrode active material, leaching and shuttle phenomena of lithium polysulfide are occurred during the charging/discharging, and the lithium polysulfide is transferred to the negative electrode, reducing the capacity of the lithium-sulfur battery, and as a result, there is a big problem that the lithium-sulfur battery has a reduced lifetime and reduced reactivity. That is, since the polysulfide leached from the positive electrode has a high solubility in the organic electrolyte solution, unwanted movement (PS shuttling) may occur toward the negative electrode through the electrolyte, and as a result, a decrease in capacity due to irreversible loss of the positive electrode active material and a decrease in the lifetime of the battery due to deposition of sulfur particles on the surface of lithium metal due to side reactions are occurred.

Meanwhile, the behavior of such a lithium-sulfur battery can vary greatly depending on the electrolyte. The electrolyte when sulfur in the positive electrode is leached into the electrolyte in the form of lithium polysulfide (LiPS) is called catholyte and the electrolyte when sulfur hardly leaches out in the form of lithium polysulfide is called sparingly solvating electrolyte (SSE). Since the lithium-sulfur battery utilizing the existing catholyte system is dependent on the liquid phase reaction through the production of an intermediate product (intermediate polysulfide) in the form of Li₂Sₓ (catholyte type), there is a problem that it does not fully utilize sulfur's high theoretical discharging capacity (1,675 mAh/g), and rather, the lifetime of the battery is drastically reduced by the degradation of the battery due to leaching of polysulfide.

On the other hand, recently, a sparingly solvating electrolyte (SSE) electrolyte system that can suppress the leaching of polysulfide has been developed, and thus 90% or more of sulfur's theoretical discharging capacity can be utilized, but there is a problem in that the life of the battery is shortened due to the phenomenon that the sulfur content in the positive electrode is continuously reduced. In addition, since most of the SSE electrolyte system relies on nitrile-based solvents, there are fatal disadvantages in the lifetime of the battery, such as deterioration of the lithium negative electrode and generation of gas inside the lithium-sulfur battery by reaction with the lithium negative electrode.

Accordingly, various researches are being conducted in the industry on lithium-sulfur batteries in which sulfur, a positive electrode active material, is not leached to the electrolyte (researches on adding LiPS adsorption material to positive electrode composite or reforming existing separators made of PE, etc.), and in particular, research is being conducted on an electrolyte solution in which sulfur can undergo a solid-to-solid reaction to Li₂S which is the final discharge product, but no significant results have been achieved so far. Therefore, it is required to develop an innovative battery that has excellent lifetime performance because the content of sulfur in the positive electrode is higher than that of the existing positive electrode even while using the SSE electrolyte system, and does also not degrade the lithium negative electrode or generate gas inside the battery, and has a high energy density ( 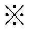 the high energy density means about 400 Wh/kg or more or 600 Wh/L or more, and to build it, an electrolyte and positive electrode active material system that can operate at 4.0 mAh/cm² or more and a porosity of 60% or less are required).

### [Disclosure]

### [Technical Problem]

Therefore, it is an object of the present invention to provide a lithium-sulfur battery having a high energy density, which is capable of utilizing 80% or more of the theoretical discharging capacity (1,675 mAh/g) of sulfur by not using a nitrile-based solvent, and is also capable of implementing an excellent lifetime performance by using together a positive electrode carbon material with high specific surface area, even while using an SSE (sparingly solvating electrolyte) electrolyte system (discharging capacity: ~1,600 mAh/gs) rather than the existing catholyte electrolyte system (discharging capacity: ~1,200 mAh/gs).

### [Technical Solution]

In order to achieve the above object, the present invention provides a lithium-sulfur battery comprising an electrolyte containing a first solvent containing a fluorine-based ether compound, a second solvent containing a glyme-based compound, and a lithium salt; and a positive electrode containing sulfur and a carbon material as an active material, wherein the carbon material comprises two or more types of carbon materials having different average pore sizes.

### [Advantageous Effects]

According to the lithium-sulfur battery having a high energy density according to the present invention, it has the advantage of utilizing 80% or more of the theoretical discharging capacity (1,675 mAh/g) of sulfur by not using a nitrile-based solvent, and also implementing an excellent lifetime performance by using together a positive electrode carbon material with high specific surface area, even while using an SSE (sparingly solvating electrolyte) electrolyte system (discharging capacity: ~1,600 mAh/gs) rather than the existing catholyte electrolyte system (discharging capacity: ~1,200 mAh/gs). In addition, the lithium-sulfur battery with high energy density according to the present invention is equipped with an electrolyte and positive electrode active material system that can operate even at 4.0 mAh/cm² or more and a porosity of 60% or less, and thus has the advantage of maintaining a high energy density of about 400 Wh/kg or more or 600 Wh/L or more.

### [Description of Drawings]

FIG. 1 is a graph showing lifetime performances of lithium-sulfur batteries manufactured according to one Example of the present invention and Comparative Examples.
FIG. 2 is a graph showing the initial discharging capacities of lithium-sulfur batteries manufactured according to one Example of the present invention and Comparative Examples.
FIG. 3 is a graph showing discharging capacities depending on charging/discharging cycles of lithium-sulfur batteries manufactured according to one Example of the present invention and Comparative Examples.

### [Best Mode]

Hereinafter, the present invention will be described in detail.

The lithium-sulfur battery according to the present invention comprises an electrolyte containing a first solvent containing a fluorine-based ether compound, a second solvent containing a glyme-based compound, and a lithium salt; and a positive electrode containing sulfur and a carbon material as an active material, and is characterized in that the carbon material comprises two or more types of carbon materials having different average pore sizes.

Recently, although an SSE (sparing solvating electrolyte) electrolyte system, which can suppress the leaching of polysulfide, has been developed, making it possible to utilize 90% or more of the theoretical discharging capacity of sulfur, there is a problem that the lifetime of the battery is shortened due to the phenomenon that the content of sulfur in the positive electrode is continuously reduced. Also, due to the nature of the SSE electrolyte system, which relies on nitrile-based solvents, since the lithium negative electrode is degenerated and gas is generated inside the lithium-sulfur battery by the reaction with the lithium negative electrode, there is still an unresolved problem of shortening the lifetime of the battery.

Accordingly, the applicant of the present invention has developed a lithium-sulfur battery which has an excellent life performance because the content of sulfur in the positive electrode is higher than before, which does not degrade the lithium negative electrode or generate gas inside the battery (i.e., improvement of lifetime) by excluding nitrile-based electrolyte solvents which are fatal to the lifetime of the lithium-sulfur battery, and using a stable ether-based electrolyte solvent, and which has a high energy density of about 400 Wh/kg or more or 600 Wh/L or more by providing an electrolyte and positive electrode active material system that can be operated at 4.0 mAh/cm² or more and a porosity of 60% or less, even while using an SSE electrolyte system with a utilization rate of sulfur of 80% or more, preferably 90 to 100%, and more preferably 94 to 100% of the theoretical discharging capacity. Meanwhile, the 'utilization rate of sulfur' is specifically the ratio of discharging capacity (mAh) per weight (gram) of sulfur element contained in the positive electrode of the battery relative to 1,675 mAh/g (sulfur), which is the theoretical capacity per weight of sulfur. For example, when the discharging capacity per weight of sulfur element present in the positive electrode of a lithium-sulfur battery is 1,600 mAh/g (sulfur), the utilization rate of sulfur is 95.5% (1,600/1,675).

That is, the applicant of the present invention sought a way to supplement the problems of the existing technology that could not maximize the performance of the battery even while using the SSE electrolyte system, and as a result, have confirmed the synergistic effect between an electrolyte containing a first solvent containing a fluorine-based ether compound, a second solvent containing a glyme-based compound and a lithium salt and a positive electrode containing sulfur and a carbon material as active materials. Through this, the applicant of the present invention has invented a lithium-sulfur battery that can utilize 80% or more of the theoretical discharging capacity of sulfur, preferably 90 to 100%, and more preferably 94 to 100%, and at the same time, is possible to operate for a long life under room temperature conditions by using a positive electrode carbon material with a high specific surface area so that the content of sulfur in the positive electrode is kept high, and has a high energy density of about 400 Wh/kg or more or 600 Wh/L or more.

Hereinafter, each of A) a first solvent containing a fluorine-based ether compound, B) a second solvent containing a glyme-based compound, C) lithium salt and D) a positive electrode included in the lithium-sulfur battery of the present invention will be described in detail.

### A) First solvent

The first solvent is an electrolyte solvent containing fluorine-based ether compounds and has an effect of suppressing polysulfide dissolution and solvent decomposition, and thus it serves to improve the coulombic efficiency (C.E.) of the battery and ultimately improve the lifetime of the battery. More specifically, the first solvent containing the fluorine-based ether compounds has excellent structural stability compared to general organic solvents containing alkanes due to fluorine substitution, and thus has very high stability. Accordingly, if it is used in the electrolyte solution of the lithium-sulfur battery, the stability of the electrolyte solution can be greatly improved, thereby improving the lifetime performance of the lithium-sulfur battery.

Examples of the fluorine-based ether compound may be at least one hydrofluoro ether-based (HFE type) compound selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropylethyl ether, 1H,1H,2'H,3H-decafluorodipropyl ether and 1H,1H,2'H-perfluorodipropyl ether.

### B) Second solvent

The second solvent is an electrolyte solvent containing a glyme-based compound (but does not contain fluorine), which dissolves not only lithium salt so that the electrolyte solution has lithium-ion conductivity, but also serves to facilitate the electrochemical reaction with lithium by leaching sulfur, which is a positive electrode active material.

Specific examples of the glyme-based compound may comprise, but is not limited to, at least one selected from the group consisting of dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether. Among them, it is preferable to use dimethoxyethane.

### C) Lithium salt

The lithium salt is an electrolyte salt used to increase ion conductivity, and may be used without limitation as long as it is commonly used in the art. Such lithium salt may be exemplified by at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate having 4 or less carbon atoms, lithium tetraphenyl borate and lithium imide.

The concentration of the lithium salt may be determined in consideration of ion conductivity and the like, and may be 0.1 to 2 M, preferably 0.5 to 1 M, and more preferably 0.5 to 0.75 M. If the concentration of the lithium salt is less than the range above, it is difficult to ensure ion conductivity suitable for operating the battery. If the concentration of the lithium salt exceeds the range above, the viscosity of the electrolyte is increased, so that the mobility of lithium ions is deteriorated, or the decomposition reaction of the lithium salt itself is increased, thereby deteriorating the performance of the battery.

In the electrolyte containing the first solvent, the second solvent and the lithium salt as described above, the molar ratio of the lithium salt, the second solvent and the first solvent may be 1: 0.5 to 3: 4.1 to 15. In addition, in one embodiment of the present invention, the molar ratio of the lithium salt, the second solvent and the first solvent may be 1: 2: 4.1 to 13 or 1: 2.5: 4.5 to 10 or 1: 3: 5 to 10. As such, in the electrolyte included in the lithium-sulfur battery of the present invention, the first solvent containing a fluorine-based ether compound may be comprised in a higher content ratio than the second solvent containing a glyme-based compound. As such, if the first solvent containing a fluorine-based ether compound is included in a higher content ratio than the second solvent containing a glyme-based compound, it has an advantage that it suppresses the production of polysulfide, enabling the realization of a capacity of the battery close to the theoretical capacity of sulfur, and suppressing the decrease in the capacity of the battery due to use of the battery. Therefore, it is preferable to set the content ratio of the first solvent containing a fluorine-based ether compound as high as possible compared to that of the second solvent containing a glyme-based compound.

### D) Positive electrode

The lithium-sulfur battery according to the present invention comprises a positive electrode containing sulfur and a carbon material as an active material, a negative electrode, a separator interposed between the positive electrode and the negative electrode and the electrolyte containing A) the first solvent containing a fluorine-based ether compound, B) the second solvent containing a glyme-based compound, and C) the lithium salt as described above. Hereinafter, the positive electrode will be described in detail.

The positive electrode comprised in the lithium-sulfur battery of the present invention comprises a positive electrode active material, a binder, and an electrically conductive material. The positive electrode active material may comprise elemental sulfur (Ss), a sulfur-based compound, or a mixture thereof. Specifically, the sulfur-based compound may be Li₂Sₙ(n≥1), an organosulfur compound or a carbon-sulfur composite ((C₂Sₓ)ₙ: x=2.5 ~ 50, n≥2). However, since the sulfur material alone has no electrical conductivity and thus must be used in combination with a conductive material, it is preferable that the positive electrode active material comprises a sulfur-carbon composite.

The sulfur-carbon composite may have a particle size of 1 to 100 *µ*m. If the particle size of the sulfur-carbon composite is less than 1 *µ*m, there is a problem that the resistance between the particles is increased and an overvoltage occurs in the electrode of the lithium-sulfur battery. If the particle size exceeds 100 *µ*m, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharging capacity of the battery can be reduced.

The sulfur (S) may be contained in an amount of 60 to 80% by weight, preferably 65 to 80% by weight, and more preferably 65 to 75% by weight, based on the total weight of the positive electrode. The content of sulfur in the positive electrode of a conventional lithium-sulfur battery is about 40 to 60% by weight relative to the total weight of the positive electrode, but despite a fact that the present invention uses sulfur in a significantly higher content than this, the present invention shows a high initial discharging capacity under the condition of the electrolyte of the present invention. If the sulfur is used in an amount of less than 60% by weight with respect to the total weight of the positive electrode, there may be a problem that the energy density of the battery is decreased. If the sulfur is used in an amount exceeding 80% by weight, there may be a problem that the conductivity in the electrode is lowered and the stability of the electrode is lowered.

The carbon material (or sulfur support material) constituting the sulfur-carbon composite has porosity. In particular, the carbon material used as the positive electrode active material of the present invention is characterized by a high specific surface area so that the content of sulfur in the positive electrode is kept high (1,000 to 4,000 m²/g, preferably 1,500 to 3,500 m²/g). In addition, in order to achieve this, the carbon material constituting the sulfur-carbon composite should comprise two or more types of carbon materials having different average pore sizes. In addition, preferably, the carbon material constituting the sulfur-carbon composite comprises a first carbon material having an average pore size of less than 2 nm and a second carbon material having an average pore size of 2 nm or more. In addition, more preferably, the carbon material constituting the sulfur-carbon composite comprises a first carbon material having an average pore size of 0.01 to 1.50 nm and a second carbon material having an average pore size of 2 to 20 nm. If the carbon material constituting the sulfur-carbon composite of the present invention does not comprise carbon materials having average pore sizes as described above, since sulfur is not sufficiently contained in the carbon material, the content of sulfur in the positive electrode is lowered, which inevitably causes a problem that the lifetime performance is lowered.

As the first carbon material having an average pore size of less than 2 nm (i.e., having fine pores of less than 2 nm), activated carbon is preferable.

As the second carbon material having an average pore size of 2 nm or more (i.e., mesopores of 2 nm or more), at least one selected from the group consisting of reduced graphene oxide(rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); graphite; graphene; and carbon fibers such as graphite nanofiber (GNF), carbon nanofiber (CNF), and activated carbon fiber (ACF) may be used.

Preferably, the first carbon material having fine pores is included in a higher content ratio than the second carbon material having mesopores. Accordingly, the content ratio of the first carbon material and the second carbon material is 80 to 99: 20 to 1, preferably 90 to 99: 10 to 1, and more preferably 97 to 99: 3 to 1 as a weight ratio. If the content ratio of the first carbon material and the second carbon material exceeds 80 to 99: 20 to 1 (weight ratio), the problem of reducing the discharging capacity may occur due to the reduced reactivity of sulfur.

In addition, if only the first carbon material is comprised as the carbon material contained in the sulfur-carbon composite, there may be a problem that the discharging voltage is low. If only the second carbon material is comprised as the carbon material contained in the sulfur-carbon composite, there may be a problem that the discharging capacity is small.

The positive electrode active material containing sulfur and a carbon material may be comprised in an amount of 80 to 99 parts by weight, preferably 90 to 95 parts by weight, based on 100 parts by weight of the total weight of the positive electrode. If the content of the positive electrode active material is less than 80 parts by weight with respect to 100 parts by weight of the total weight of the positive electrode, there is a problem that the energy density of the battery is reduced. If the content of the positive electrode active material exceeds 99 parts by weight, there may be a problem that the conductivity in the electrode is lowered and the stability of the electrode is lowered.

The binder is a component that assists in the bonding between the positive electrode active material and the electrically conductive material, etc., and the bonding to current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrenebutadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight based on 100 parts by weight of the total weight of the positive electrode. If the content of the binder is less than 1 part by weight, the adhesive strength between the positive electrode active material and the current collector may be insufficient. If the content of the binder exceeds 50 parts by weight, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the battery and has excellent electrical conductivity while not causing chemical changes in the battery. The electrically conductive material may typically be graphite or electrically conductive carbon, and may be, for example, but is not limited to, one alone selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; carbon nanotubes; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material may typically be added in an amount of 0.5 to 10 parts by weight, preferably 0.5 to 5 parts by weight, based on 100 parts by weight of the total weight of the positive electrode, but may not also be comprised in the positive electrode of the present invention. If the content of the electrically conductive material exceeds 10 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode can be manufactured by dispersing and mixing positive electrode active material, the binder, the electrically conductive material and the like in a dispersion medium (solvent) to form a slurry, and applying the slurry onto the positive electrode current collector, followed by drying and rolling it. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode is a lithium-based metal, and may further include a current collector on one side of the lithium-based metal. The current collector may be a negative electrode current collector. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition, sintered carbon, a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on its surface, sheet, foil, net, porous body, foam, nonwoven fabric and the like. In addition, the thickness of the negative electrode current collector is in the thickness range of 3 to 50 ,um. If the thickness of the negative electrode current collector is less than 3 *µ*m, the current collecting effect is lowered. On the other hand, if the thickness exceeds 50 *µ*m, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without a particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylene such as high-density polyethylene, linear low-density polyethylene, low-density polyethylene, and ultra-high molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spun-bond or a melt-blown nonwoven fabric composed of long fibers.

The thickness of the separator is not particularly limited, but is preferably in the range of 1 to 100 ,um, more preferably 5 to 50*µ*m. If the thickness of the separator is less than 1 *µ*m, the mechanical properties cannot be maintained. If the thickness of the separator exceeds 100 *µ*m, the separator acts as a resistive layer, thereby deteriorating the performance of the battery. The pore size and porosity of the separator are not particularly limited, but it is preferable that the pore size is 0.1 to 50 *µ*m and the porosity is 10 to 95%. If the separator has a pore size of less than 0.1 *µ*m or a porosity of less than 10%, the separator acts as a resistive layer. If the separator has a pore size of exceeding 50 *µ*m or a porosity of exceeding 95%, mechanical properties cannot be maintained.

The lithium-sulfur battery of the present invention comprising the electrolyte solution, the positive electrode, the negative electrode, and the separator as described above can be manufactured through a process of facing the positive electrode with the negative electrode, interposing the separator between them, and then injecting the electrolyte solution.

On the other hand, the lithium-sulfur battery according to the present invention is applied to a battery cell used as a power source for a small device, and can be also particularly suitably used as a unit cell for a battery module, which is a power source for medium and large-sized devices. In this aspect, the present invention also provides a battery module comprising two or more lithium-sulfur batteries electrically connected (series or parallel). Of course, the quantity of lithium-sulfur batteries comprised in the battery module may be variously adjusted in consideration of the use and capacity of the battery module. Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto.

Hereinafter, preferred examples are presented to aid understanding of the present invention, but the following examples are merely illustrative of the present invention, and it is obvious to those skilled in the art that various changes and modifications are possible within the scope and spirit of the present invention, and it goes without saying that that these changes and modifications fall within the scope of the appended claims.

### [Example 1] Manufacture of lithium-sulfur battery

### Preparation of electrolyte

First, LiTFSI(concentration: 0.65 M), dimethoxyethane (the second solvent) and 1,1,2,2-tetrafluoroethyl 2,2,3,3-tetrafluoropropylether (TTE, the first solvent) were mixed at room temperature in a molar ratio of 1: 2: 9 to prepare an electrolyte (SSE) for a lithium-sulfur battery.

### Manufacture of positive electrode

90 parts by weight of a sulfur-carbon composite (S: C = 70: 30 weight ratio) as a positive electrode active material (the content of sulfur alone was set to be 63% by weight based on the total weight of the positive electrode, and activated carbon (the first carbon material) having an average pore size of less than 2 nm and reduced graphene oxide (rGO, the second carbon material) having an average pore size of 2 nm or more were mixed at a weight ratio of 99: 1 and used as the carbon material), 5 parts by weight of Denka black as an electrically conductive material and 5 parts by weight of styrene butadiene rubber/carboxymethyl cellulose (SBR: CMC = 7: 3) as a binder were mixed to prepare a slurry composition for a positive electrode, and then, the prepared slurry composition was coated on a current collector (aluminum foil), dried at 50 °C for 12 hours, and pressurized with a roll press to prepare a positive electrode (at this time, the loading amount was set to 3.0 mAh/cm²).

### Manufacture of lithium-sulfur battery

The prepared positive electrode and the lithium metal negative electrode having a thickness of 150 *µ*m are positioned to face each other, and a polyethylene (PE) separator is interposed therebetween, and the prepared electrolyte is injected to manufacture a coin cell type lithium-sulfur battery. Meanwhile, in the manufacture of the battery, the positive electrode was used after being punched out as a circular electrode of 14 phi, the polyethylene separator was used after being punched out at 19 phi, and the lithium metal was used after being punched out at 16 phi. In addition, the battery was manufactured by applying a sparing solvating electrolyte (SSE) electrolyte system.

### [Comparative Example 1] Manufacture of lithium-sulfur battery

A coin cell type lithium-sulfur battery was manufactured in the same manner as in Example 1, except that only activated carbon (the first carbon material) having an average pore size of less than 2 nm is used as the carbon material contained in sulfur-carbon composite (that is, the second carbon material is not used).

### [Comparative Example 2] Manufacture of lithium-sulfur battery

A coin cell type lithium-sulfur battery was manufactured in the same manner as in Example 1, except that only reduced graphene oxide (rGO, the second carbon material) having an average pore size of 2 nm or more is used as the carbon material contained in sulfur-carbon composite (that is, the first carbon material is not used).

### [Experimental Example 1] Evaluation of lifetime performance of lithium-sulfur battery

The lifetime characteristics of the batteries were evaluated while charging and discharging the lithium-sulfur batteries prepared in Example 1 and Comparative Examples 1 and 2 for a total of 15 cycles by charging and discharging 3 cycles each at 0.1C, 0.2C, 0.3C, 0.5C, and 1.0C, and after that, while charging and discharging at 0.3C. At this time, the voltage range used was 1.0 to 3.6 V, and the evaluation temperature was 25 °C, respectively.

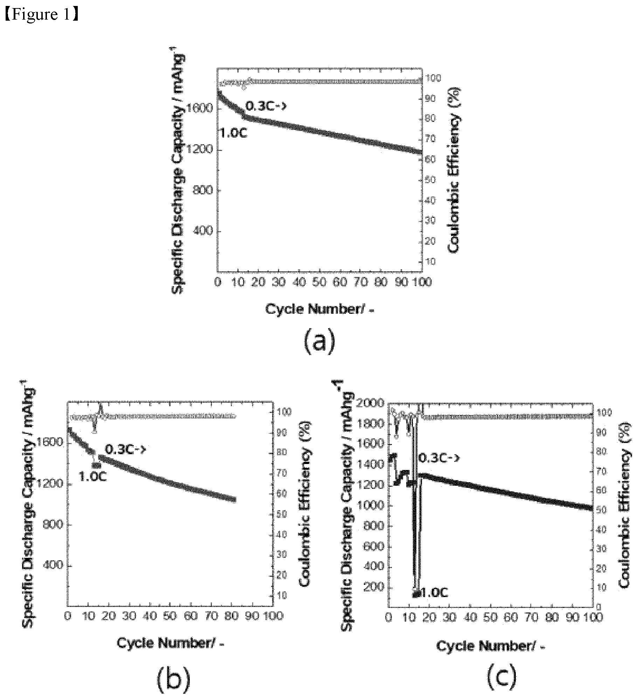

FIG. 1 is a graph showing lifetime performances of lithium-sulfur batteries manufactured according to one Example of the present invention and Comparative Examples, and (a) in FIG. 1 corresponds to Example 1, (b) in FIG. 1 corresponds to Comparative Example 1, and (c) in FIG. 1 corresponds to Comparative Example 2. As a result of evaluating the lifetime performance of the lithium-sulfur batteries manufactured in Example 1 and Comparative Examples 1 and 2 as above, it was confirmed that the lithium-sulfur battery of Example 1 manufactured by incorporating together the first carbon material with an average pore size of less than 2 nm and the second carbon material with an average pore size of 2 nm or more into the sulfur-carbon composite exhibits superior lifetime performance compared to the lithium-sulfur battery of Comparative Example 1 manufactured by incorporating only the first carbon material with an average pore size of less than 2 nm into a sulfur-carbon composite and the lithium-sulfur battery of Comparative Example 2 manufactured by incorporating only the second carbon material with an average pore size of 2 nm or more into a sulfur-carbon composite, as shown in FIG. 1.

### [Experimental Example 2] Evaluation of discharging capacity of lithium-sulfur battery

The discharging capacities of the batteries were evaluated while charging and discharging at a rate of 0.1C up to 3 cycles, and then at a rate of 0.2C up to 6 cycles, and then at a rate of 0.3C up to 9 cycles, and then at a rate of 0.5C up to 12 cycles, and then at a rate of 1.0C up to 16 cycles. At this time, the voltage range used was 1.0 to 3.6 V, and the evaluation temperature was 25 °C, respectively.

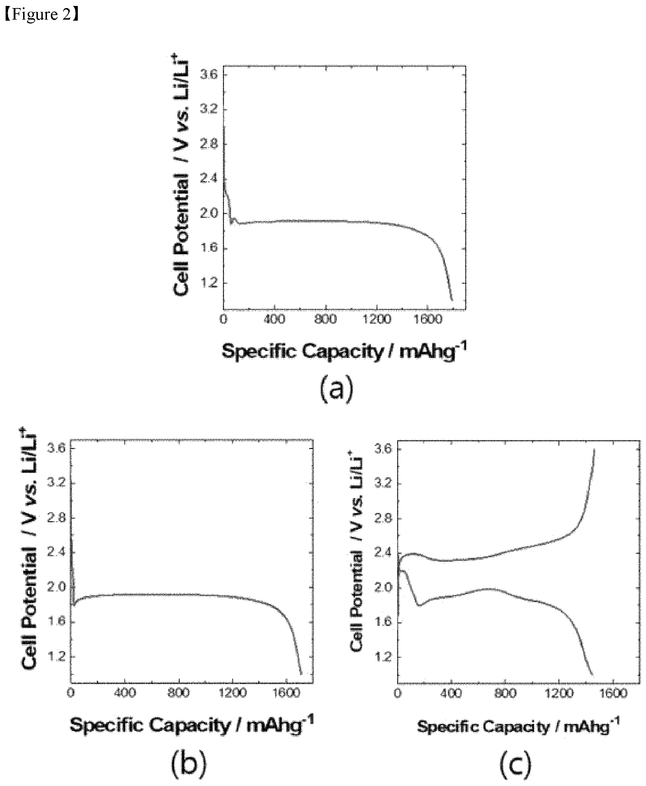

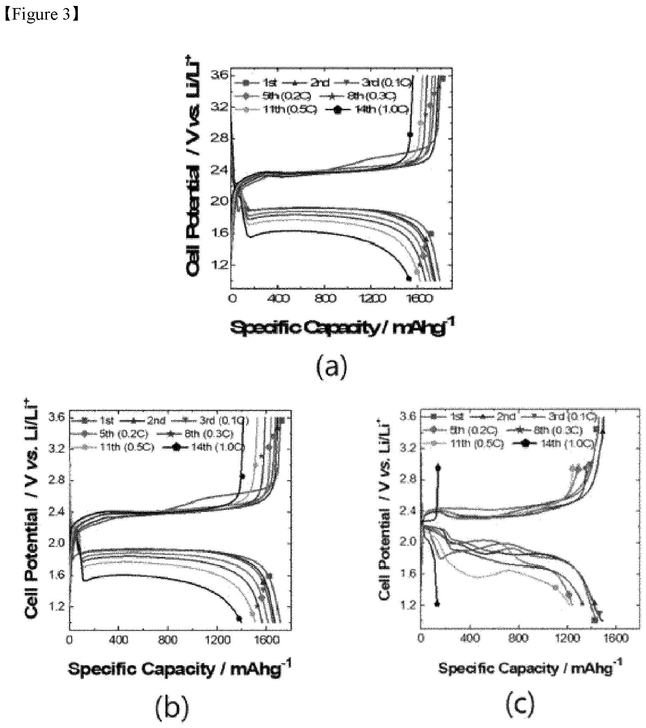

FIG. 2 is a graph showing the initial discharging capacities of lithium-sulfur batteries manufactured according to one Example of the present invention and Comparative Examples, and (a) in FIG. 2 corresponds to Example 1, (b) in FIG. 2 corresponds to Comparative Example 1, and (c) in FIG. 2 corresponds to Comparative Example 2. In addition, FIG. 3 is a graph showing discharging capacities depending on charging/discharging cycles of lithium-sulfur batteries manufactured according to one Example of the present invention and Comparative Examples, and (a) in FIG. 3 corresponds to Example 1, (b) in FIG. 3 corresponds to Comparative Example 1, and (c) in FIG. 3 corresponds to Comparative Example 2.

First, as a result of evaluating the initial discharging capacities of the lithium-sulfur batteries manufactured in Example 1 and Comparative Examples 1 and 2 as described above, it was found that the lithium-sulfur battery of Example 1 manufactured by incorporating together the first carbon material with an average pore size of less than 2 nm and the second carbon material with an average pore size of 2 nm or more into the sulfur-carbon composite is relatively superior in initial discharging capacity relative to the lithium-sulfur battery of Comparative Example 1 manufactured by incorporating only the first carbon material with an average pore size of less than 2 nm into a sulfur-carbon composite and the lithium-sulfur battery of Comparative Example 2 manufactured by incorporating only the second carbon material with an average pore size of 2 nm or more into a sulfur-carbon composite, as shown in FIG. 2.

Next, as a result of evaluating the discharging capacities depending on the charging/discharging cycles of the lithium-sulfur batteries manufactured in Example 1 and Comparative Examples 1 and 2 as described above, it was confirmed that the discharging capacity of the lithium-sulfur battery of Example 1 manufactured by incorporating together the first carbon material with an average pore size of less than 2 nm and the second carbon material with an average pore size of 2 nm or more into the sulfur-carbon composite is generally superior to the discharging capacities of the lithium-sulfur battery of Comparative Example 1 manufactured by incorporating only the first carbon material with an average pore size of less than 2 nm into a sulfur-carbon composite and the lithium-sulfur battery of Comparative Example 2 manufactured by incorporating only the second carbon material with an average pore size of 2 nm or more into a sulfur-carbon composite, as shown in FIG. 3. In particular, it was found that as the charging/discharging cycles are repeated, the difference becomes clearer, showing the discharging capacity approaching 1,600 mAh/g even after 14 cycles.

As such, the lithium-sulfur battery of the present invention realizes long lifetime operation while utilizing 80% or more of the theoretical discharging capacity of sulfur, which is a level that conventional lithium-sulfur batteries using the SSE electrolyte system have not shown so far. Therefore, it can be seen from the above that in the case of a lithium-sulfur battery to which the SSE electrolyte system is applied, the carbon material used as a positive electrode active material must particularly contain two or more types of carbon materials with different average pore sizes, and preferably, in order to maximize the performance of the battery, the carbon material used as the positive electrode active material should comprise together a first carbon material having an average pore size of less than 2 nm and a second carbon material having an average pore size of 2 nm or more.

## Claims

1. A lithium-sulfur battery, comprising:
an electrolyte containing a first solvent containing a fluorine-based ether compound, a second solvent containing a glyme-based compound, and a lithium salt; and
a positive electrode containing sulfur and a carbon material as an active material,
wherein the carbon material comprises two or more types of carbon materials having different average pore sizes.

2. The lithium-sulfur battery according to claim 1, wherein the carbon material comprises a first carbon material having an average pore size of less than 2 nm and a second carbon material having an average pore size of 2 nm or more.

3. The lithium-sulfur battery according to claim 1, wherein the carbon material comprises a first carbon material having an average pore size of 0.01 to 1.50 nm and a second carbon material having an average pore size of 2 to 20 nm.

4. The lithium-sulfur battery according to claim 2, wherein the first carbon material is activated carbon having an average pore size of less than 2 nm.

5. The lithium-sulfur battery according to claim 2, wherein the second carbon material is selected from the group consisting of reduced graphene oxide, carbon black, carbon nanotubes, graphite, graphene, and carbon fibers having an average pore size of 2 nm or more.

6. The lithium-sulfur battery according to claim 2, wherein the content ratio of the first carbon material and the second carbon material is 80 to 99: 20 to 1 as a weight ratio.

7. The lithium-sulfur battery according to claim 1, wherein the utilization rate of sulfur contained in the positive electrode is 80% or more of the theoretical discharging capacity.

8. The lithium-sulfur battery according to claim 1, wherein the positive electrode active material contained in the positive electrode comprises a sulfur-carbon composite.

9. The lithium-sulfur battery according to claim 1, wherein the sulfur is contained in an amount of 60 to 80% by weight based on the total weight of the positive electrode.

10. The lithium-sulfur battery according to claim 1, wherein the electrolyte does not contain a nitrile-based solvent.

11. The lithium-sulfur battery according to claim 1, wherein the molar ratio of the lithium salt, the second solvent and the first solvent is 1: 0.5 to 3: 4.1 to 15.

12. The lithium-sulfur battery according to claim 1, wherein the utilization rate of sulfur contained in the positive electrode is 90 to 100% of the theoretical discharging capacity.

13. The lithium-sulfur battery according to claim 1, wherein the energy density of the lithium-sulfur battery is 400 Wh/kg or more or 600 Wh/L or more.
